# EUROPEAN PATENT SPECIFICATION

(11) **EP 1 887 544 B1**
(45) Date of publication and mention of the grant of the patent: **02.09.2009**
(21) Application number: 07014591.7
(22) Date of filing: 25.07.2007
(51) Int. Cl.: G09G 3/16

(54) **A drive method and a drive device for an electrophoretic display panel, an electrophoretic display device, and an electronic device**
Ansteuerverfahren und Ansteuervorrichtung für eine elektrophoretische Anzeigetafel, elektrophoretische Anzeigevorrichtung und elektronisches Gerät
Procédé de commande et dispositif de commande d'un panneau d'affichage électrophorétique, dispositif d'affichage électrophotorétique, et dispositif électronique

(30) Priority: 28.07.2006 JP 2006206982; 04.06.2007 JP 2007148157
(43) Date of publication of application: 13.02.2008
(73) Proprietor: Seiko Epson Corporation, Shinjuku-ku Tokyo 163-0811 (JP)
(72) Inventor: Ishii, Junichiro, Seiko Epson Corporation, Suwi-shi, Nagano-ken 392-8502 (JP)
(74) Representative: HOFFMANN EITLE

(56) References cited:
- WO-A-03/044765
- WO-A-20/05055187
- US-A- 4 041 481
- US-A1- 2002 021 483

## Description

### BACKGROUND OF THE INVENTION

### 1. Field of Invention

The present invention relates to a drive method and a drive device for an electrophoretic display panel, to an electrophoretic display device, and to an electronic device.

### 2. Description of Related Art

Electrophoretic display panels that operate using electrophoresis, a method of causing electrophoretic particles that are dispersed in a suspension fluid to migrate by means of an electric charge, are known from the literature and are used in many types of electronic devices, including information devices and electronic timepieces. Such electrophoretic display panels commonly have electrophoretic particles of different polarity and color, such as black and white, disposed in a fluid sealed between opposing electrodes. See, for example, Japanese Unexamined Patent Appl. Pub. JP-A-S52-70791, FIG. 5.

As described in JP-A-S52-70791, one electrode is divided into a plurality of segments, a voltage is applied to the electrode of a particular segment and an opposing common electrode to cause that particular segment to display, and the color displayed by the segment can be changed by switching the polarity of the applied voltage. This electrophoretic display panel affords high contrast between the segments that are driven so that the white particles migrate to the front (the display side) and the segments that are driven so that the black particles migrate to the front. This electrophoretic display panel also generally provides excellent image retention. These characteristics enable a high quality, energy efficient display device.

In order to change the display, the drive method described in FIG. 5 in JP-A-S52-70791 applies a drive pulse that varies between a prescribed voltage V and 0 V to the common electrode and holds the potential of the segment electrode for the segment to be changed at the prescribed voltage V or 0 V in order to produces a potential difference to the drive pulse at a regular period. A pulse of the same phase and same potential as the drive pulse applied to the common electrode is also applied to the segment electrode for each segment that is to retain the same display content so that a potential difference to the common electrode does not occur.

This drive method enables changing the display color from white to black and from black to white at the same time in different segments. This affords more natural display changes and improves the display quality because changing the display in some segments does not require first wiping all segments to display white and then redrawing those segments that are to display black, for example.

Furthermore, because this drive method is a two potential drive method that applies only two different potentials to the electrodes, the arrangement of the drive device can be simplified compared with the prior art arrangement taught in JP-A-S52-70791 (FIG. 3) in which common electrode potential is 0 V and either a positive or negative potential is applied to the segment electrodes according to whether the segment display is to change or retain the same image. Compared with the prior art arrangement using three potential levels, this two potential drive method also reduces power consumption more when a step-up circuit, for example, is included in the drive device. The withstand voltage of the voltage switching transistors is also approximately half that of the prior art.

US 2002/0021483 A1 is concerned with a method and circuit for driving an electrophoretic display.

WO 03/044765 A2 is concerned with methods for driving bistable electro-optic displays.

### SUMMARY OF THE INVENTION

A problem with the two potential drive method taught in JP-A-S52-70791 is that the reflectivity of the segments that are to retain the displayed imaged during the display redrawing process gradually drops so that the contrast to the other segments also drops. This drive method applies a pulse identical to the pulse applied to the common electrode to the segment electrodes of the segments that are to retain the same display image, a voltage gradient should therefore not develop in the electrophoretic particle dispersion, and the display should therefore not change, but this problem of declining contrast is particularly pronounced when continuously driving the display segments, such as when the numeric seconds display is counted up every second in the clock mode of a timepiece. Segments that should remain black, for example, therefore gradually shift towards white and display quality drops.

The cause of this phenomenon is unclear, but one conceivable cause is that the waveform of the pulses reaching the common electrode becomes offset from the waveform of the pulses reaching the segment electrodes due to differences in the electrical paths from the electrophoretic display panel drive device to the individual electrodes, producing a voltage gradient with a polarity causing the color that should be retained to change to a different color.

A drive method and a drive device for an electrophoretic display panel, an electrophoretic display device, and an electronic device according to the present invention prevent a drop in the display quality of segments that are to retain the same display state.

A first aspect of the invention is a drive method for an electrophoretic display panel having one electrode as a common electrode and another electrode divided into a plurality of segment electrodes, characterised by the method comprising steps of: applying pulses that change between two different potential levels to the common electrode; applying pulses at one of the two potential levels to the segment electrode of a segment that changes display state to produce a potential difference to the pulse applied to the common electrode; applying pulses of the same phase and potential as the pulses applied to the common electrode to the segment electrode of a segment that holds the same display state; and inserting a high impedance state to the pulses applied to the common electrode and the pulses applied to the segment electrode of the segment that holds the same display state when the pulse potential changes.

Another aspect of the invention is a drive device for an electrophoretic display panel having one electrode as a common electrode and another electrode divided into a plurality of segment electrodes, characterised by the drive device comprising: a common electrode drive unit that applies pulses that change between two different potential levels to the common electrode; a display changing drive unit that applies pulses at one of the two potential levels to the segment electrode of a segment that changes display state to produce a potential difference to the pulse applied to the common electrode; a display retention drive unit that applies pulses of the same phase and potential as the pulses applied to the common electrode to the segment electrode of a segment that holds the same display state; and a high impedance insertion unit that inserts a high impedance state to the pulses applied to the common electrode and the pulses applied to the segment electrode of the segment that holds the same display state when the pulse potential changes.

A drive device for an electrophoretic display panel according to another embodiment of the invention is a drive device for applying voltage between the segment electrodes and the common electrode of an electrophoretic display panel, the drive device comprising: a first potential generating unit that generates one of two different potentials; a second potential generating unit that generates the other of the two potentials; a pulse generating unit that generates pulses that change between the two potential levels; a common electrode pin for outputting pulses to the common electrode; a plurality of segment electrode pins corresponding to the plural segments; and a display control unit that outputs pulses at one of the two generated potential levels from the segment electrode pin of a segment that changes display state to produce a potential difference to the pulse output from the common electrode pin, and outputs the same pulses as the pulses output from the common electrode pin from the segment electrode pin of a segment that holds the same display state.

As a result of our research into the problems described above, we discovered that the reflectivity of segments that are to hold the same display state does not drop and display quality does not drop if a high impedance is inserted when the pulse potential changes.

By inserting a high impedance period to the pulses applied to the common electrode and the pulses applied to the segment electrode of a segment that holds the same display state, potential is not applied to the electrodes when the pulse potential changes between the two potential levels. As a result, even if a delay occurs between the voltage waveform of the pulses applied to the common electrode and the voltage waveform of the pulses applied to the segment electrode of the segment that holds the same display state, the potential difference caused by this delay when the pulse potential changes can be suppressed.

Causes for a potential difference occurring when the pulse potential changes are not limited to a pulse delay, but by inserting a high impedance period an electric field is not applied to the electrophoretic particle dispersion when the pulse potential changes. The display color of the segment that holds the same display state can therefore be reliably held and a drop in the display quality can be prevented in segments that hold the same display state.

Power consumption is also reduced because a potential is not applied in the high impedance state to segments that hold the same display state.

A high impedance state can be achieved by methods known from the literature, such as interrupting the power supply to the drive device, and any suitable method can be used.

The pulses in the invention must simply change between two potential levels in one period, but the effect of the invention is particularly noticeable in a continuous drive mode in which pulses are applied over multiple periods.

During continuous drive, such as when adjusting the time or improving contrast by causing the electrophoretic particles to migrate closer to the front or back side of the panel, the effect of a drop in display quality each time the pulse level changes can be stopped from accumulating and becoming severe.

The arrangement of a conventional two-potential display driver is also not changed greatly by inserting a high impedance state, and the invention can therefore be implemented at a low cost. Furthermore, because the invention can be rendered using a two-potential drive method, the drive device can be simply arranged and power consumption can be reduced.

The electrophoretic display panel drive method of the invention further preferably inserts the high impedance state at each rise and fall of each pulse.

Because a high impedance state is inserted whenever the pulse potential changes, there is no chance for a potential difference to occur and a drop in the display quality of segments that are to hold the same display state can be prevented more reliably than when a high impedance state is inserted every other pulse period, for example.

Yet further preferably, the electrophoretic display panel drive method applies a high impedance state at the same timing to the pulses applied to the segment electrode of the segment that changes display state.

This aspect of the invention can easily drive the display and simplifies the arrangement of the drive device by thus uniformly inserting a high impedance state at the same timing to the common electrode and each of the segment electrodes.

Another aspect of the invention is an electrophoretic display device having the drive device described above and the electrophoretic display panel.

An electronic device according to another aspect of the invention has the electrophoretic display device of the invention.

By using the electrophoretic display device of the invention this aspect of the invention affords the same operation and effect described above.

Yet further preferably, the electronic device of the invention is a timepiece having a timekeeping unit for keeping time, and displays time information from the timekeeping unit on the electrophoretic display panel.

By improving the display quality, this aspect of the invention improves the appearance of the timepiece. A timepiece is an object of interest and personal taste for which appearance is particularly important, and is an excellent application of the invention.

The invention prevents a drop in display quality when the display is driven continuously to adjust the time, which is an essential function of any timepiece, and renders the displayed digits and other content easy to read.

Battery life is also extended by reducing power consumption as a result of inserting a high impedance state.

The timepiece can also be easily mass produced because the drive device can be easily achieved at low cost.

The invention thus prevents a drop in the display quality of segments that are to retain the same display state.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is an external plan view of an electronic timepiece according to a preferred embodiment of the present invention.

FIG. 2 is a plan view of the electrophoretic display module in the preferred embodiment of the present invention.

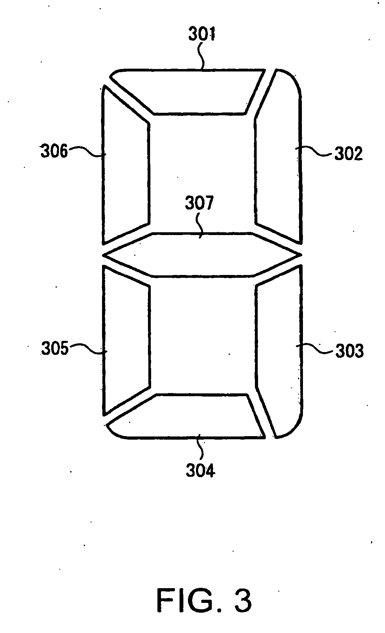

FIG. 3 is an enlarged view of a segment shown in FIG. 2.

FIG. 4 is a section view through line IV-IV in FIG. 2.

FIG. 5 is a schematic view of the electrophoretic layer in the preferred embodiment of the present invention.

FIG. 6 is a block diagram showing the electrical arrangement of the control circuit board in the preferred embodiment of the present invention.

FIG. 7 is a block diagram of the display drive unit in the preferred embodiment of the present invention.

FIG. 8 shows sample waveforms of the drive signals applied in the electrophoretic display panel according to the preferred embodiment of the present invention.

FIG. 9 is a graph showing the relationship between contrast and voltage in the preferred embodiment of the present invention.

### DESCRIPTION OF THE PREFERRED EMBODIMENTS

Preferred embodiments of the present invention are described below with reference to the accompanying figures.

### 1. General arrangement

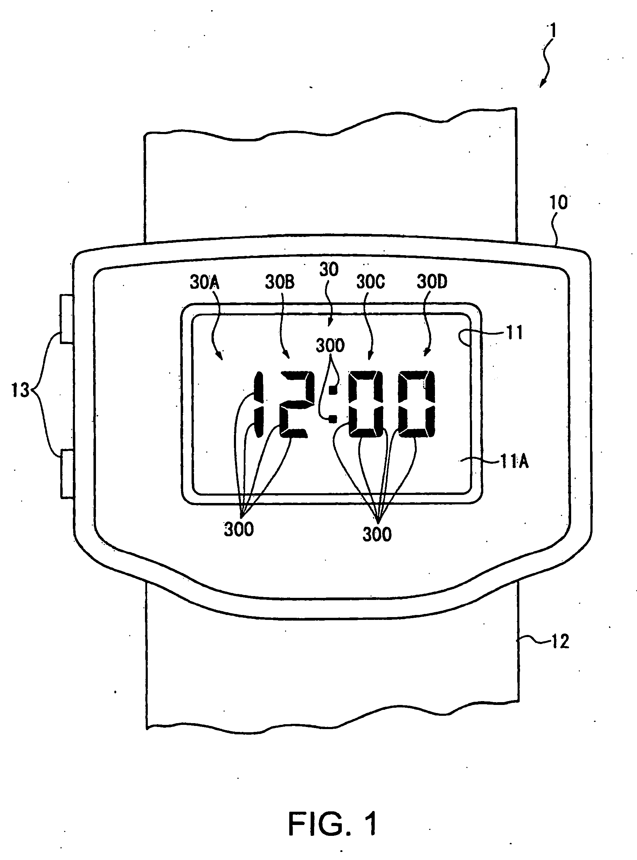

FIG. 1 is an external plan view of a timepiece 1 used by way of example as an electronic device according to a preferred embodiment of the present invention.

This timepiece 1 is rendered as an electronic timepiece with a digital display, and has a case 10 having a rectangular window 11 for displaying time information on the front, a band 12, and an electrophoretic display panel 30 that is visible through the window 11. A crystal 11A is disposed in the window 11, and operating buttons 13 for adjusting the time, for example, are disposed on the side of the case 10.

### 2. Electrophoretic display module

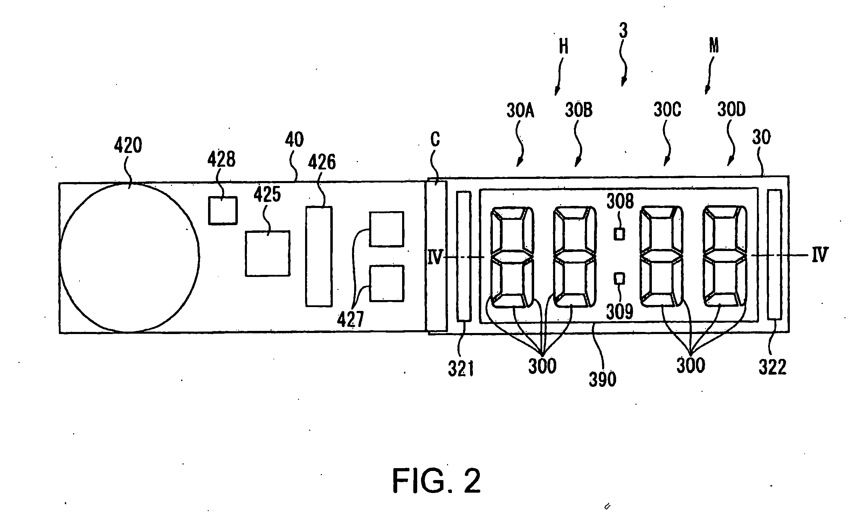

FIG. 2 is a schematic plan view of the electrophoretic display module 3 in the preferred embodiment of the present invention. The electrophoretic display module 3 includes the electrophoretic display panel 30 and a control circuit board 40 connected to each other by a wiring member C such as an anistropic conductive film (ACF) . Note that when housed in the case 10, the electrophoretic display panel 30 and the control circuit board 40 are folded together at the wiring member C so that one overlaps the other.

### 2-1 Control circuit board

The control circuit board 40 includes a power source 420 for supplying drive power to the timepiece 1, a master controller 425 for controlling the timepiece 1, a driver IC 426 as the drive device of the electrophoretic display panel 30, switches 427, and a crystal oscillation circuit 428. The power source 420 is a primary cell in this aspect of the invention but could be a secondary cell or other type of power supply device.

The driver IC 426 and the wiring member C are connected together although the connection is not shown in detail in the figures.

### 2-2 Electrophoretic display panel

The electrophoretic display panel 30 has four numeric display units 30A to 30D, and the display area of each of the display units 30A to 30D is a seven-segment display composed of segments 301 to 307. Two segments 308 and 309 render a colon (:) between numeric display units 30B and 30C. The two display units 30A and 30B on the left side of the colon render an hour display unit H, and the two display units 30C and 30D on the right side of the colon render a minute display unit M.

Segments 301 to 309 are referred to as segments 300 below unless it is necessary to specifically reference any of the individual segments 301 - 309.

The display panel 30 also has a background display electrode 390 for displaying a background in the display area other than the segments 300.

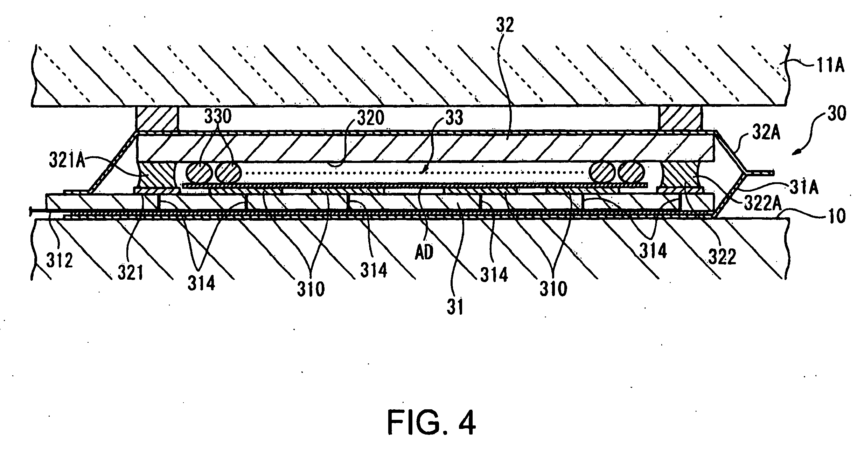

FIG. 4 is a section view of the electrophoretic display panel 30 through line IV-IV in FIG. 2.

The electrophoretic display panel 30 is rectangular when seen in plan view, is disposed inside the case 10, and includes a display substrate 31, a transparent substrate 32, and an electrophoretic layer 33 disposed between the display substrate 31 and the transparent substrate 32.

A segment electrode 310 is provided on the surface of the display substrate 31 (the surface opposite the transparent substrate 32) of each segment 300, and electrodes 321 and 322 conductive to electrodes on the transparent substrate 32 side are disposed along both long sides of the display substrate 31.

Numerous microcapsules 330 are bonded to the surface of the segment electrode 310 by an adhesive (adhesive layer) AD. These microcapsules 330 render an electrophoretic layer 33.

A wiring pattern 312 connecting the segment electrode 310, the background display electrode 390, and the electrodes 321 and 322 formed on the surface of the display substrate 31 to the control circuit board 40 by means of the wiring member C (FIG. 2) is formed on the back side of the display substrate 31. The wiring pattern 312 and the electrodes are connected through vias 314 passing through the thickness of the display substrate 31.

A transparent common electrode 320 made of indium tin oxide (ITO), for example, is disposed on the back side of the transparent substrate 32 (the side opposing the display substrate display substrate 31). This common electrode 320 is disposed over substantially the entire back side of the transparent substrate 32, and is an electrode common to each of the segment electrodes 310. The voltage driving each segment is applied between the corresponding segment electrode 310 and the common electrode 320. A conductive member 321A, 322A is further disposed between the common electrode 320 and each of the electrodes 321 and 322.

A moisture resistant sheet 32A disposed on the surface of the transparent substrate 32, and a moisture resistant sheet 31A disposed on the back of the display substrate 31, seal the transparent substrate 32, the microcapsules 330, and the display substrate 31.

### 3. Controlling the display by electrophoresis

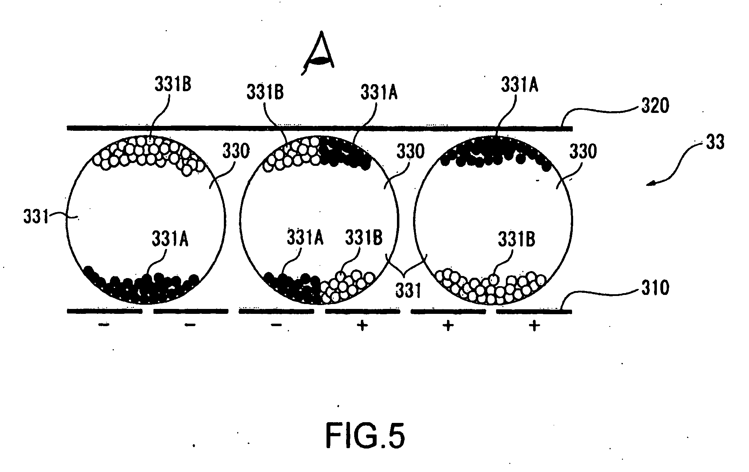

FIG. 5 is a schematic diagram of the electrophoretic layer 33 in this electrophoretic display panel 30. The electrophoretic layer 33 consists of numerous microcapsules 330 disposed in a dense array with each of the microcapsules 330 filled with a suspension medium 331 containing many charged electrophoretic particles. The suspension medium 331 contains a dispersion of black electrophoretic particles ("black particles") 331A and white electrophoretic particles ("white particles") 331B, thus forming a two color electrophoretic layer. The black particles 331A and the white particles 331B are oppositely charged, the black particles 331A being positively charged and the white particles 331B being negatively charged in this embodiment of the invention.

If the segment electrode 310 is set to a LOW potential level and the common electrode 320 is set to a HIGH potential level, the resulting potential difference produces an electric field from the common electrode 320 to the segment electrode 310, thus causing the positively charged black particles 331A to migrate to the segment electrode 310, the negatively charged white particles 331B to migrate to the common electrode 320, and the display appears white.

If the segment electrode 310 is then driven to the HIGH potential and the common electrode 320 is driven to the LOW potential, the field reverses and the electrophoretic display panel 30 changes from displaying white to displaying black. In the case shown in FIG. 1, each of the segments rendering the numbers and colon of the time "12:00" displays black.

Gradations between black and white can be displayed by adjusting the applied voltage and how long the voltage is applied to control how far the black particles 331A and white particles 331B migrate.

When the electric field stops, migration of the black particles 331A and the white particles 331B also stops and the color displayed at that time is retained.

### 4. Control circuit unit

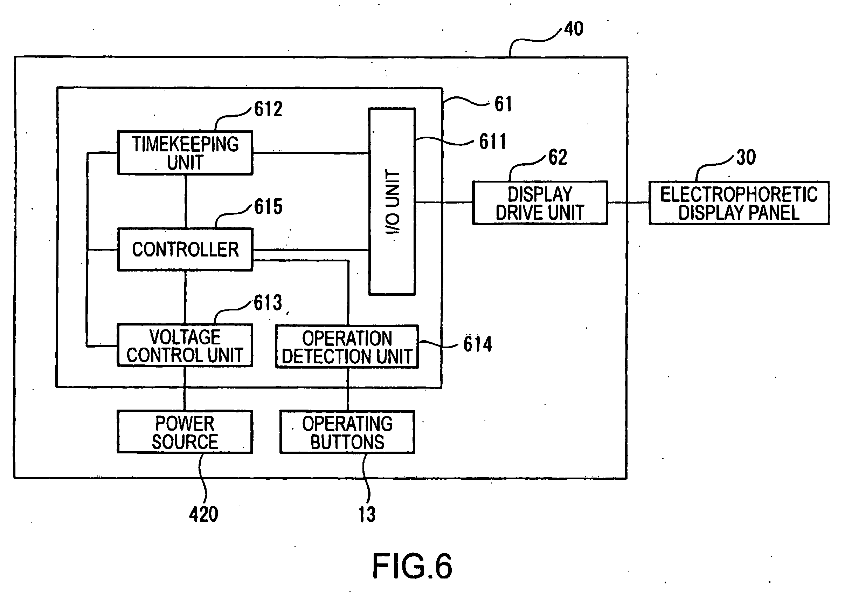

FIG. 6 is a block diagram showing the electrical arrangement of the control circuit board 40 shown in FIG. 2. The control circuit board 40 has a drive control unit 61 disposed to the controller 425 and a display drive unit 62 disposed to the driver IC 426 (FIG. 2).

The drive control unit 61 has an input/output unit 611 for handling display drive unit 62 input and output, a timekeeping unit 612 for keeping time, a voltage control unit 613 for supplying power from the power source 420 to other circuit elements 425 to 428, an operation detection unit 614 for detecting operation of the operating buttons 13, and a controller 615 for controlling operation of the other parts 611 to 614 of the drive control unit 61.

The timekeeping unit 612 keeps time by counting the number of pulses emitted from the crystal oscillation circuit 428, and the timekeeping unit 612 is connected to the display drive unit 62 through the I/O unit 611.

The display drive unit 62 applies a drive signal to the electrophoretic display panel 30 for applying a voltage between the common electrode 320 and the segment electrodes 310 of the electrophoretic display panel 30. More specifically, the display drive unit 62 applies a drive signal of a specific voltage to each of the segment electrodes 310 based on the time information acquired from the timekeeping unit 612.

### 4-1. Display panel drive device

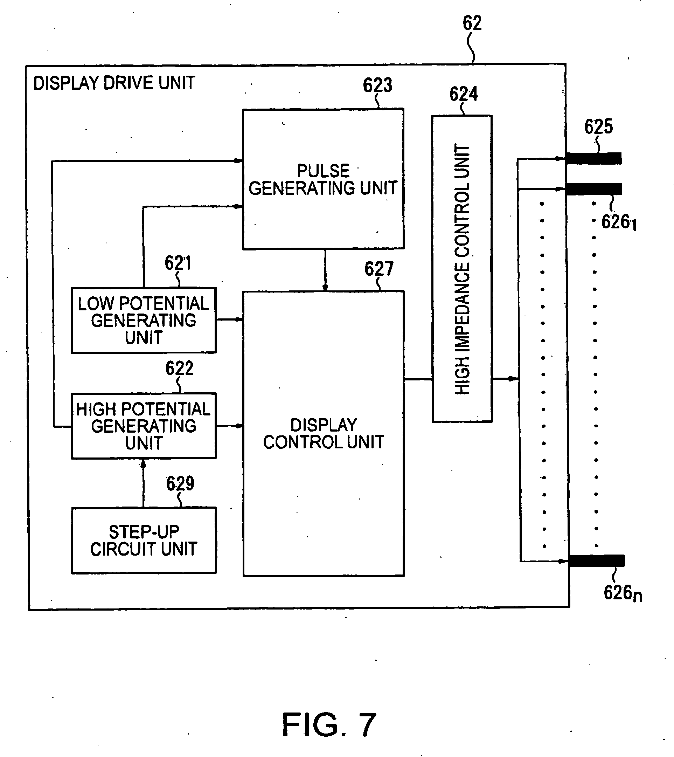

FIG. 7 is a block diagram of the display drive unit 62 that drives the electrophoretic display panel 30. The display drive unit 62 has a low potential generating unit 621, a high potential generating unit 622, a pulse generating unit 623, a high impedance control unit 624, and a step-up circuit unit 629.

The low potential generating unit 621 generates the LOW potential (0 V in this aspect of the invention). The high potential generating unit 622 is connected to the step-up circuit unit 629 and generates the HIGH potential (18 V in this embodiment of the invention). The pulse generating unit 623 generates pulses of the potential levels produced by the potential generating units 621 and 622, and the high impedance control unit 624 inserts a high impedance state to the generated pulses.

The step-up circuit unit 629 boosts the voltage (such as 3 V) supplied from the power source 420 to +18 V, for example.

The display drive unit 62 also has a common electrode pin 625 that is connected to the common electrode 320, and a plurality of segment electrode pins 6261 - 626n each corresponding to one of the segments 300, as the plural output pins of the driver IC 426. The display drive unit 62 also has a display control unit 627 for switching the potential that is applied to the common electrode pin 625 and each of the segment electrode pins 6261 - 626n according to the display state.

The high impedance control unit 624 inserts a high impedance state uniformly to the output of the display control unit 627 in this embodiment of the invention, but the invention is not so limited. More specifically, the output from the display control unit 627 can be applied without inserting the high impedance to the segment electrode pins 6261 - 626n of the segments 300 that hold the same display state.

The pulses output by the pulse generating unit 623 are applied through the display control unit 627 to the common electrode pin 625 in this embodiment of the invention, but the pulses output by the pulse generating unit 623 can be applied directly to the common electrode pin 625 without going through the display control unit 627.

The high impedance control unit 624 also has the ability to hold all output pins of the display drive unit 62 in the high impedance state in the non-driven state of the electrophoretic display panel 30 in which the display state of the electrophoretic display panel 30 remains unchanged.

The low potential generating unit 621, the high potential generating unit 622, the pulse generating unit 623, the display control unit 627, the high impedance control unit 624, the common electrode pin 625, and the segment electrode pins 6261 - 626n of the display drive unit 62 thus render a common electrode drive unit for driving the common electrode 320, and a display changing drive unit and display retaining drive unit for driving the segments 300.

### 5. Display panel drive control

Drive control of the electrophoretic display panel 30 by the display drive unit 62 is described next. How the display drive unit 62 controls driving the electrophoretic display panel 30 to continuously update at one second intervals the numbers displaying the hour and minute or the seconds, which are not normally displayed on the electrophoretic display panel 30, in response to the user pressing one of the operating buttons 13 to select the time setting mode and then operating the operating buttons 13 to change the display is described next.

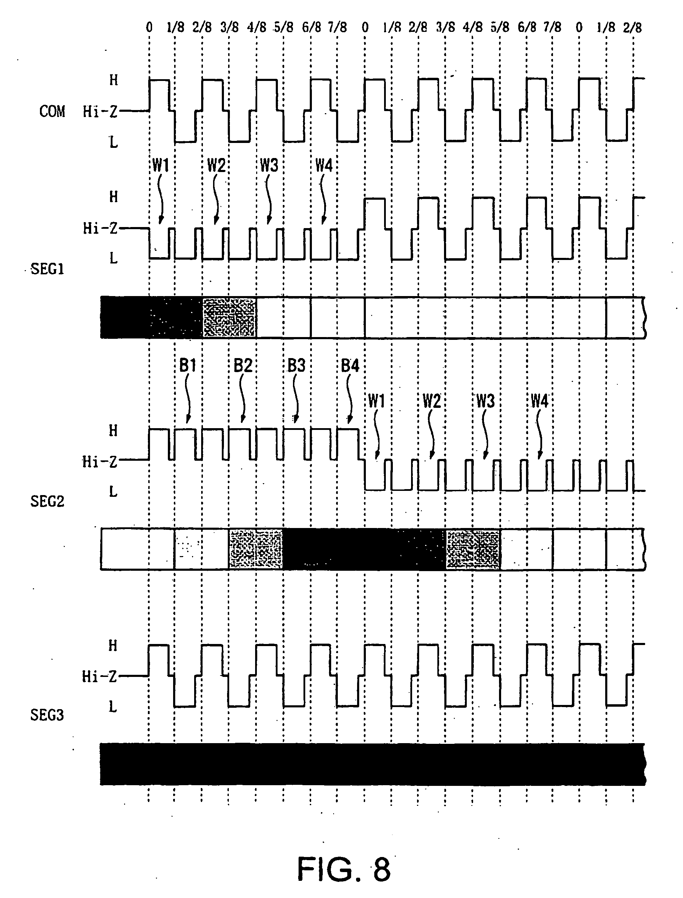

FIG. 8 shows an example of the voltage waveforms of the drive signal COM applied to the common electrode 320 and the drive signals SEG1, SEG2, SEG3 applied to three different segment electrodes 310.

FIG. 8 shows the waveforms of the signals applied when a "9" is displayed in display unit 30B or 30D (FIG. 2) and the number increments to "0" and then "1" at a 1-second interval. In this example drive signal SEG1 drives segment 307, drive signal SEG2 drives segment 305, and drive signal SEG3 drives segment 302. Driving segments 301, 303, 304, and 306 is also controlled in the same way as segments 302, 305, and 307.

The drive signal COM is generated by the pulse generating unit 623 of the display drive unit 62, and has a waveform that varies between LOW and HIGH potential levels and has a high impedance state Hi-Z inserted at the rise from LOW to HIGH and at the fall from HIGH to LOW. The half wavelength of the drive signal COM is 125 ms in this embodiment of the invention (shown as 1/8 second in FIG. 8), the LOW period and the HIGH period are each 90 ms, and the high impedance Hi-Z period is 35 ms, for example.

The potential, wavelength, and high impedance period described in this embodiment of the invention are used for example only and can be set appropriately according to the characteristics of the electrophoretic display panel 30 and the required redrawing speed of the display. The length of the high impedance Hi-Z period also depends upon the output voltage, and the high impedance Hi-Z insertion period could conceivably be variable according to the output voltage.

For the first 1-second period the display control unit 627 of the display drive unit 62 holds the drive signal SEG1 LOW while inserting a high impedance, thereby applying a potential difference to the drive signal COM each time the drive signal COM goes HIGH (periods W1, W2, W3, W4). A voltage is thus applied in periods W1 to W4, causing the white particles 331B to gradually migrate to the front side of the display and the display color of the segment 307 to change from black to white. Because the segment 307 is held white for the next 1-second period, the drive signal SEG1 is a pulse of the same phase and same potential as the drive signal COM.

For the next 1-second period the display control unit 627 of the display drive unit 62 holds the drive signal SEG2 HIGH while inserting a high impedance, thereby applying a potential difference to the drive signal COM each time the drive signal COM goes LOW (periods B1 to B4). A voltage is thus applied in periods B1 to B4, causing the black particles 331A to gradually migrate to the front side of the display and the display color of the segment 305 to change from white to black.

The segment 307 to which the drive signal SEG1 is applied changes from black to white and the segment 305 to which the drive signal SEG2 is applied changes from white to black at the same time.

During the next 1-second period drive signal SEG2 is held LOW to reverse the display color from black to white.

The display control unit 627 of the display drive unit 62 sets the drive signal SEG3 to the same phase and same potential as the drive signal COM so that the corresponding segment 302 continuously displays black.

Because a high impedance state Hi-Z is inserted to the pulse waves of the drive signal SEG3 and the drive signal COM and potential is not applied when the pulses switch between LOW and HIGH, a delay between the drive signal SEG3 and the drive signal COM has no effect on the display, and the HIGH and LOW states of the drive signal SEG3 remain synchronized with the HIGH and LOW states of the drive signal COM. While the real cause is not clear, inserting a high impedance state can prevent a drop in display quality caused by a drop in the reflectivity of the segments 300.

A refresh process for updating the display state of all segments 300 at a prescribed frequency is not used when continuously driving the display as described in FIG. 8. More specifically, inserting the high impedance state Hi-Z when the pulse potential changes prevents a drop in display quality and a refresh process is therefore not needed.

### 6. Effect of the invention

Some of the benefits of the present invention are described below.

(1) Inserting a high impedance state Hi-Z to each pulse of the drive signal COM of the electrophoretic display panel 30 and the drive signal SEG3 of the segments that hold the same display state prevents a drop in the display quality of the segments 300 that are to retain the same display state.

The appearance of the timepiece 1 can be improved by thus improving the display quality.

(2) Power consumption can also be reduced because applying a potential to the segments 300 that are to retain the same display state stops in the high impedance state Hi-Z. This extends the battery life.

(3) Furthermore, because the display is driven as described above when continuously updating the display to adjust the time, for example, the effect of a drop in display quality each time the pulse level changes can be stopped from accumulating and becoming severe.

(4) The driver IC 426 used in this embodiment of the invention can be achieved by simply adding a high impedance insertion function to a conventional two-potential display driver and can therefore be achieved at low cost.

(5) Because a high impedance state Hi-Z is inserted at the rise and fall of each pulse of the drive signal SEG3 and the drive signal COM, there is no chance for a potential difference to occur and a drop in the display quality of segments 300 that are to hold the same display state can be prevented more reliably than when a high impedance state Hi-Z is inserted every other pulse period, for example.

(6) The arrangement of the driver IC 426 can also be simplified because the high impedance state Hi-Z is inserted to the drive signals SEG1 and SEG2 applied to the segments 300 that change display state at the same time as the drive signal SEG3 and the drive signal COM, and the display drive unit 62 can thus uniformly insert the high impedance state Hi-Z to the common drive signal COM and the segment drive signals SEG1, SEG2, SEG3.

### * Variations of the invention

The invention is described above with reference to a preferred embodiment but the invention is not so limited and can be improved and modified in various ways without departing from the scope of the accompanying claims.

For example, the foregoing embodiment of the invention describes a black and white, two particle electrophoretic display using black particles 331A and white particles 331B, but the invention is not so limited. More particularly, colors other than black and white can be used.

A high impedance state Hi-Z is inserted to both the rise and fall of each pulse in the embodiment described above, but the invention is not so limited. More specifically, whether a drop in reflectivity can be prevented more effectively by inserting a high impedance state at the rising edge or the falling edge of each pulse can be determined according to the electrophoretic characteristic of the electrophoretic particles, and the high impedance state could be inserted at the more effective pulse edge.

Further alternatively, a high impedance state could be inserted at a specific frequency of every one to plural pulse periods.

More specifically, inserting even only a single high impedance period suppresses the potential difference when the pulse potential changes and contributes to improved display quality, and the invention is therefore not limited to inserting a high impedance state at a particular frequency or count, for example.

The foregoing embodiment of the invention does not apply a display refreshing process in the time setting mode, but the invention is not so limited. More specifically, a display refreshing process can be executed at a desirable interval in conjunction with inserting a high impedance state when the pulse potential changes. For example, if a high impedance state is inserted at a prescribed frequency, such as every one to plural pulse periods, the display refreshing process could be executed at the same time to good effect.

A high impedance Hi-Z is inserted in the time setting mode in the embodiment described above by way of example, but the high impedance state Hi-Z can also be inserted to each pulse of the drive signal COM and the drive signals SEG3 applied to the segments that hold the same display state when changing the hour or minute in the normal clock mode displaying the time. This helps reduce power consumption and improve display quality.

The invention can also be used in a wide range of electronic devices including, for example, personal digital assistants (PDA), cell phones, memory cards, digital cameras, video cameras, printers, and personal computers.

The timepiece of the invention is also not limited to a wristwatch, and could be a pocket watch, a mantle clock, or a wall clock, for example.

Although the present invention has been described in connection with the preferred embodiments thereof with reference to the accompanying drawings, it is to be noted that various changes and modifications to the shape, material, quantity, and other details will be apparent to those skilled in the art. Such changes and modifications are included within the scope of the present invention as defined by the appended claims.

### * Working example

A working example of the invention is described below.

An electrophoretic display panel and drive device arranged substantially as described above were driven using the control method described above and evaluated.

### 1. Evaluated conditions

The conditions affording maximum contrast and no drop in display quality were determined.

### 2. Measurement conditions

The following measurement conditions were set for the output voltage (drive voltage) and the length of the high impedance period inserted to the pulses.

(1) Drive voltage: 12 V, 15 V, 18 V

(2) High impedance period: 0 ms to 70 ms (10 ms increments)

(3) No display refreshing process

(4) Normal temperature

3. Measurement method

### (1) Contrast

Light absorption was measured after driving the entire display panel to change from all white to all black in 8 pulse periods three times.

### (2) Drop in display quality

The display was driven to change the display state every second (four pulse periods) and a drop in display quality was visually evaluated.

### 4. Results and conclusion

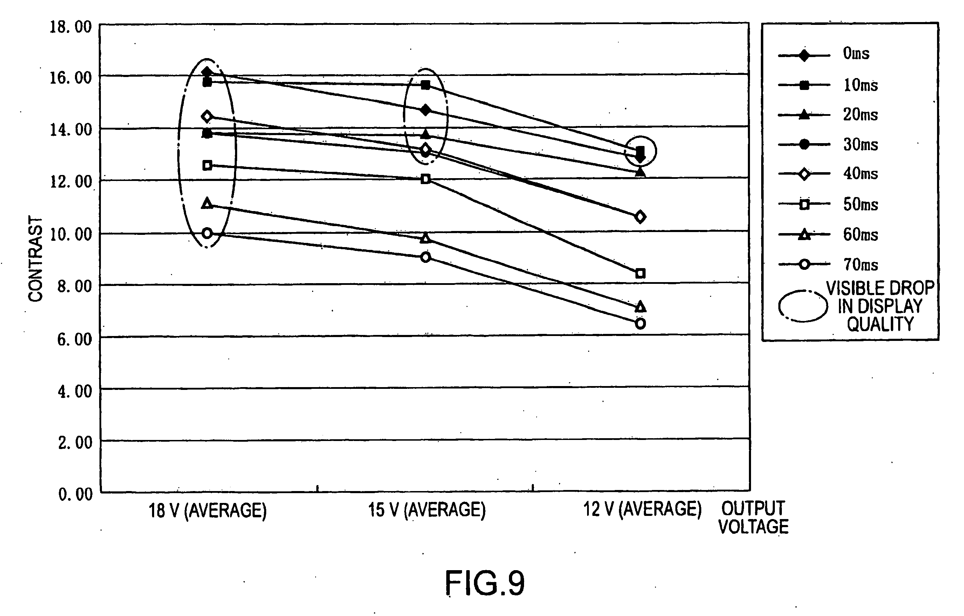

The results of these measurements are shown in FIG. 9. As will be known from FIG. 9 the maximum contrast drops as the output voltage drops, the maximum contrast drops as the high impedance period becomes longer, and the maximum contrast rises as the high impedance period becomes shorter.

The conditions for good contrast without a drop in display quality are therefore a 15-V output voltage and a 50-ms high impedance insertion period as shown in FIG. 9.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims.

## Claims

1. A drive method for an electrophoretic display panel (30) having one electrode (320) as a common electrode (320) and another electrode (310) divided into a plurality of segment electrodes (310), the method comprising the steps of:
applying pulses that change between two different potential levels to the common electrode;
applying pulses at one of the two potential levels to the segment electrode (310) of a segment that changes display state to produce a potential difference to the pulse applied to the common electrode (320) ;
applying pulses of the same phase and potential as the pulses applied to the common electrode to the segment electrode (310) of a segment that holds the same display state; the method being **characterised by**:
inserting a high impedance state to the pulses applied to the common electrode (320) and the pulses applied to the segment electrode (310) of the segment that holds the same display state, when the pulse potential changes.

2. The electrophoretic displaypanel drive method described in claim 1, wherein the high impedance state is inserted at each rise and fall of each pulse.

3. The electrophoretic display panel drive method described in claim 1, wherein a high impedance state is applied to the pulses applied to the segment electrode (310) of the segment that changes display state at the same time as a high impedance state is applied to the pulses applied to the segment electrode that holds the same display state.

4. A drive device for an electrophoretic display panel (30) having one electrode (320) as a common electrode (320) and another electrode (310) divided into a plurality of segment electrodes (310), the drive device comprising:
a common electrode drive unit (62) for applying pulses that change between two different potential levels to the common electrode (320) ;
a display changing drive unit (62) for applying pulses at one of the two potential levels to the segment electrode of a segment that changes display state to produce a potential difference to the pulse applied to the common electrode (320) ;
a display retention drive unit (62) for applying pulses of the same phase and potential as the pulses applied to the common electrode (320) to the segment electrode (310) of a segment that holds the same display state; the drive device being **characterised by**:
a high impedance insertion unit (624) adapted to insert a high impedance state to the pulses applied to the common electrode (320) and the pulses applied to the segment electrode (310) of the segment that holds the same display state, when the pulse potential changes.

5. A drive device according to claim 4, the drive device comprising:
a first potential generating unit (621) for generating one of two different potentials;
a second potential generating unit (622) for generating the other of the two potentials;
a pulse generating unit (623) for generating pulses that change between the two potential levels;
a common electrode pin (625) for outputting pulses to the common electrode (320);
a plurality of segment electrode pins (626l-626n) corresponding to the plural segments; and
a display control unit (627) for outputting pulses at one of the two generated potential levels from the segment electrode pin (6261-626n) of a segment that changes display state to produce a potential difference to the pulse output from the common electrode pin (625), and for outputting the same pulses as the pulses output from the common electrode pin (625) from the segment electrode pin (626l-626n) of a segment that holds the same display state.

6. An electrophoretic display device comprising:
the drive device described in claim 4 or claim 5; and
the electrophoretic display panel (30).

7. An electronic device comprising the electrophoretic display device described in claim 6.

8. The electronic device described in claim 7, wherein:
the electronic device is a timepiece (1) having a timekeeping unit for keeping time; and
the electronic device is adapted to display timing information from the time keeping unit on the electrophoretic display panel (30).

## Patentansprüche

1. Antriebsverfahren für ein elektrophoretisches Anzeigefeld (30), das eine Elektrode (320) als eine gemeinsame Elektrode (320) und eine weitere Elektrode (310), die in mehrere Segmentelektroden (310) aufgeteilt ist, aufweist, wobei das Verfahren die folgenden Schritte umfasst:
Anlegen von Pulsen an die gemeinsame Elektrode, die zwischen zwei verschiedenen Potentialebenen wechseln;
Anlegen von Pulsen bei einer der zwei Potentialebenen an die Segmentelektrode (310) eines Segments, das den Anzeigezustand ändert, um eine Potentialdifferenz zu dem an die gemeinsame Elektrode (320) angelegten Puls zu erzeugen;
Anlegen von Pulsen mit der gleichen Phase und dem gleichen Potential wie bei den an die gemeinsame Elektrode angelegten Pulsen an die Segmentelektrode (310) eines Segments, das den gleichen Anzeigezustand hält; wobei das Verfahren **gekennzeichnet ist durch**:
Einfügen eines hochohmigen Zustands in die an die gemeinsame Elektrode (320) angelegten Pulse und die an die Segmentelektrode (310) des Segments, das den gleichen Anzeigezustand hält, angelegten Pulse, wenn sich das Pulspotential ändert.

2. Das Antriebsverfahren für ein elektrophoretisches Anzeigefeld nach Anspruch 1, bei dem der hochohmige Zustand bei jedem Anstieg und jeder Abnahme jedes Pulses eingefügt wird.

3. Das Antriebsverfahren für ein elektrophoretisches Anzeigefeld nach Anspruch 1, bei dem zu dem gleichen Zeitpunkt, zu dem ein hochohmiger Zustand auf die an die Segmentelektrode, die den gleichen Anzeigezustand hält, angelegten Pulse aufgebracht wird, ein hochohmiger Zustand auf die an die Segmentelektrode (310) des Segments, das den Anzeigezustand ändert, angelegten Pulse aufgebracht wird.

4. Antriebseinrichtung für ein elektrophoretisches Anzeigefeld (30), das eine Elektrode (320) als eine gemeinsame Elektrode (320) und eine weitere Elektrode (310), die in mehrere Segmentelektroden (310) aufgeteilt ist, aufweist, wobei die Antriebseinrichtung umfasst:
eine gemeinsame-Elektroden-Antriebseinheit (62) zum Anlegen von Pulsen an die gemeinsame Elektrode (320), die zwischen zwei verschiedenen Potentialebenen wechseln;
eine Anzeigenänderungs-Antriebseinheit (62) zum Anlegen von Pulsen bei einer der zwei Potentialebenen an die Segmentelektrode eines Segments, das den Anzeigezustand ändert, um eine Potentialdifferenz zu dem an die gemeinsame Elektrode (320) angelegten Puls zu erzeugen;
eine Anzeigenaufrechterhaltungs-Antriebseinheit (62) zum Anlegen von Pulsen mit der gleichen Phase und dem gleichen Potential wie bei den an die gemeinsame Elektrode (320) angelegten Pulsen an die Segmentelektrode (310) eines Segments, das den gleichen Anzeigezustand hält; wobei die Antriebseinrichtung **gekennzeichnet ist durch**:
eine Hochimpedanz-Einfügeeinheit (624), die geeignet ist, einen hochohmigen Zustand in die an die gemeinsame Elektrode (320) angelegten Pulse und die an die Segmentelektrode (310) des Segments, das den gleichen Anzeigezustand hält, angelegten Pulse einzufügen, wenn sich das Pulspotential ändert.

5. Antriebseinrichtung nach Anspruch 4, wobei die Antriebseinrichtung umfasst:
eine erste Potentialerzeugungseinheit (621) zum Erzeugen eines von zwei verschiedenen Potentialen;
eine zweite Potentialerzeugungseinheit (622) zum Erzeugen des anderen der zwei Potentiale;
eine Pulserzeugungseinheit (623) zum Erzeugen von Pulsen, die zwischen den zwei Potentialebenen wechseln;
einen gemeinsame-Elektroden-Anschluss (625) zum Ausgeben von Pulsen an die gemeinsame Elektrode (320);
mehrere Segmentelektrodenanschlüsse (626l-626n), die den mehreren Segmenten entsprechen; und
eine Anzeigesteuereinheit (627) zum Ausgeben von Pulsen bei einer der zwei erzeugten Potentialebenen von dem Segmentelektrodenanschluss (6261-626n) eines Segments, das den Anzeigezustand ändert, um eine Potentialdifferenz zu dem von dem gemeinsame-Elektroden-Anschluss (625) ausgegebenen Puls zu erzeugen, und zum Ausgeben der gleichen Pulse wie die von dem gemeinsame-Elektroden-Anschluss (625) ausgegebenen Pulse von dem Segmentelektrodenanschluss (6261-626n) eines Segments, das den gleichen Anzeigezustand hält.

6. Elektrophoretische Anzeigeeinrichtung umfassend:
die Antriebseinrichtung nach Anspruch 4 oder Anspruch 5; und
das elektrophoretische Anzeigefeld (30).

7. Elektronische Einrichtung, welche die elektrophoretische Anzeigeeinrichtung nach Anspruch 6 umfasst.

8. Elektronische Einrichtung nach Anspruch 7, bei der:
die elektronische Einrichtung eine Uhr (1) mit einer Zeitnahmeeinheit zum Zeitnehmen ist; und
die elektronische Einrichtung geeignet ist, Zeitinformation von der Zeitnahmeeinheit auf dem elektrophoretischen Anzeigefeld (30) anzuzeigen.

## Revendications

1. Procédé de commande pour un panneau d'affichage électrophorétique (30) ayant une électrode (320) en tant qu'électrode commune (320) et une autre électrode (310) divisée en une pluralité d'électrodes de segment (310), le procédée comprenant les étapes suivantes:
l'application d'impulsions qui changent entre deux niveaux de potentiels différents à l'électrode commune;
l'application d'impulsions de l'un des deux niveaux de potentiels à l'électrode de segment (310) d'un segment qui modifie l'état d'affichage pour produire une différence de potentiel de l'impulsion appliquée à l'électrode commune (320),
l'application d'impulsions de phase et de potentiel identique à l'impulsion appliquée à l'électrode de segment (310), à l'électrode de segment (310) d'un segment qui maintient le même état d'affichage, le procédé étant **caractérisé par**
l'insertion d'une impédance élevée aux impulsions appliquées à l'électrode commune (320) et aux impulsions appliquées à l'électrode de segment (310) du segment qui maintient le même état d'affichage quand le potentiel d'impulsion change.

2. Procédé de commande pour un panneau d'affichage électrophorétique décrit dans la revendication 1, dans lequel l'état d'impédance élevé est inséré à chaque augmentation ou chute de chaque impulsion.

3. Procédé de commande pour un panneau d'affichage électrophorétique décrit dans la revendication 1, dans lequel un état d'impédance élevé est appliqué aux impulsions appliquées à l'électrode de segment (310) du segment qui modifie l'état d'affichage en même temps qu'un état d'impédance élevé est appliqué aux impulsions appliquées à l'électrode de segment qui maintient le même état d'affichage.

4. Dispositif de commande pour un panneau d'affichage électrophorétique (30) ayant une électrode (320) en tant qu'électrode commune (320) et une autre électrode (310) divisée en une pluralité d'électrodes de segment (310), le dispositif de commande comprenant :
une unité de commande d'électrode commune (62) pour l'application d'impulsions qui varie entre deux niveaux de potentiels différents, à l'électrode commune (320);
une unité de commande de changement d'affichage (62) pour appliquer des impulsions de l'un des deux niveaux potentiels à l'électrode de segment d'un segment qui change l'état d'application pour produire une différence de potentiel à l'impulsion appliquée à l'électrode commune (320),
un unité de commande de rétention d'affichage (62) pour appliqué des impulsions de potentiel et de phase identique aux impulsions appliquées à l'électrode commune (320), à l'électrode de segment (310) d'un segment qui maintient le même état d'affichage, le dispositif de commande étant **caractérisé par** :
une unité d'insertion d'impédance élevée (624) appropriée pour insérer un état d'impédance élevé des impulsions appliquées à l'électrode commune (320) et les impulsions appliquées à l'électrode de segment (310) du segment qui maintient le même état d'affichage quand le potentiel d'impulsion change.

5. Dispositif de commande selon la revendication 4, le dispositif de commande comprenant :
une première unité de génération de potentiel (621) pour la génération de l'un des deux potentiels différents;
une seconde unité de génération de potentiel (622) pour la génération de l'autre potentiel différent;
une unité de générations d'impulsions (623) pour générer des impulsions qui changent entre deux niveaux de potentiels;
une broche d'électrode commune (625) pour émettre des impulsions à l'électrode commune (320);
une pluralité de broches d'électrode de segment (6261-626n) correspondant à la pluralité des segments; et
une unité de commande d'affichage (627) pour émettre à l'un des niveaux de potentiel générés depuis la broche de segment d'électrode (6261-626n) d'un segment qui change l'état d'affichage pour produire une différence de potentiel à la sortie d'impulsions depuis la broche d'électrode commune (625) et pour émettre les mêmes impulsions que les impulsions émises par la broche d'électrode commune (625) depuis la broche d'électrode de segment (6261-626n) d'un segment qui maintient le même état d'affichage.

6. Dispositif d'affichage électrophorétique comprenant le dispositif de commande décrit dans la revendication 4 ou 5; et le panneau d'affichage électrophorétique (30).

7. Dispositif électronique comprenant le dispositif d'affichage électrophorétique décrit dans la revendication 6.

8. Dispositif électronique décrit dans la revendication 7, dans lequel le dispositif est un appareil d'horlogerie (1) ayant une unité de conservation de temps pour conserver le temps; et
le dispositif électronique est adapté pour afficher des informations de temps et d'heures provenant de l'unité de conservation de temps sur le panneau d'affichage électrophorétique (30).
